# EUROPEAN PATENT SPECIFICATION

(11) **EP 2 312 894 B1**
(45) Date of publication and mention of the grant of the patent: **16.07.2014**
(21) Application number: 09806354.8
(22) Date of filing: 07.08.2009
(51) Int. Cl.: H04W 72/12

(54) **METHOD, APPARATUS AND SYSTEM FOR RADIO RESOURCE SCHEDULE**
VERFAHREN, GERÄT UND SYSTEM FÜR RADIORESOURCENZEITPLAN
PROCÉDÉ, APPAREIL ET SYSTÈME DE PROGRAMMATION DE RESSOURCES RADIO

(30) Priority: 12.08.2008 CN 200810142343
(43) Date of publication of application: 20.04.2011
(60) Divisional application: 14166508.3
(73) Proprietor: Huawei Technologies Co., Ltd., Longgang District, Shenzhen Guangdong 518129 (CN)
(72) Inventor: ZHOU, Zhaojie, Shenzhen Guangdong 518129 (CN); LIU, Qi, Shenzhen Guangdong 518129 (CN)
(74) Representative: Kreuz, Georg Maria
(86) International application number: PCT/CN2009/073137
(87) International publication number: WO 2010/017751

(56) References cited:
- EP-A1- 1 748 593
- WO-A1-2006/120540
- WO-A1-2009/079812
- WO-A1-2009/079812
- CN-A- 101 023 699
- US-A1- 2005 220 042
- US-A1- 2008 187 070
- "Universal Mobile Telecommunications System (UMTS); Multiplexing and channel coding (FDD) (3GPP TS 25.212 version 7.8.0 Release 7); ETSI TS 125 212", ETSI STANDARD, EUROPEAN TELECOMMUNICATIONS STANDARDS INSTITUTE (ETSI), SOPHIA ANTIPOLIS CEDEX, FRANCE, vol. 3-R1, no. V7.8.0, 1 July 2008 (2008-07-01), XP014042105,

## Description

### FIELD OF THE TECHNOLOGY

The present invention relates to the field of wireless communication, and more particularly to a radio resource scheduling method, apparatus and system.

### BACKGROUND OF THE INVENTION

High Speed Uplink Packet Access (HSUPA) is an uplink enhancement technology on the wireless side introduced by the 3^{rd} Generation Partnership Project (3GPP) protocol system in R6 version. HSUPA accomplishes the high-rate uplink data transmission function by rapid retransmission, Hybrid Automatic Retransmission Request (HARQ), and base station-based distributed control method. Five new types of physical channels, namely, Enhanced-Dedicated Physical Data Channel (E-DPDCH), Enhanced-Dedicated Physical Control Channel (E-DPCCH), Enhanced-Absolute Grant Channel (E-AGCH), Enhanced-Relative Grant Channel (E-RGCH), Enhanced-HARQ Acknowledgement Indicator Channel (E-HICH), and two new MAC entities, namely, MAC-e and MAC-es, are introduced in HSUPA; the packet scheduling function is moved downwards from a base station controller to a base station, thereby achieving rapid packet scheduling based on the base station; and a maximum uplink data throughput being up to 5.76 Mbit/s is achieved through HARQ, short 2 ms radio frames, multi-code transmission, and other key technologies, thereby greatly improving the uplink data service bearer capability.

The 3GPP protocol defines an Absolute Grant (AG) table for indicating index values of The network side looks up an different grants. A granting process is described in the following AG table according to the index value, so as to obtain an AG value. It can be known from the granting process that, both the network side and the UE side require an AG table, and it needs to be ensured that the network side and the UE side have the same understanding about the AG.

In the implementation of the present invention, the inventor found that the prior art at least has the following detect. In a certain case, the network side and the UE side may have different understandings about the AG, resulting in deviation or error of the AG.

It should be noted that, the above description of the prior art and defects thereof is merely illustrated by taking a Wideband Code Division Multiple Access (WCDMA) system as an example. It should be understood that, in other communication systems, especially in a Time Division-Synchronous Code Division Multiple Access (TD-SCDMA) system, similar problems also exist and need to be solved.

US patent application US 2008/0187070 A1 relates to wireless communications where multiple power grant tables are used for different categories of users. Multiple power grant tables are stored in a wireless transmit/receive unit (WTRU). The WTRU receives a signal designating which table is to be used to grant power levels during a communication.

International patent application WO 2006120540 A1 provides a network which schedules a mobile station for an uplink packet transmission. A network schedules a mobile station for an uplink packet transmission on a data channel, receives from a mobile station an uplink message on a control channel, determines from the uplink message a desired power for the mobile station to transmit the data channel, and thereafter transmits to the mobile station a power control message that commands either a zero power allocation or a full power allocation for the scheduled uplink packet transmission.

The european patent application EP 2 224 755 A1, claiming priority on 2007-12-10 and published on 2010-09-01, provides a method for configuring the absolute grant mapping table for a base station.

In this method, a radio network controller notifies the base station of the absolute grant mapping relationship table used by an enhanced dedicated channel absolute grant channel (E-AGCH) through a signaling, the base station returns a response message to the radio network controller after storing the configured information. This method allows the absolute grant mapping relationship table used by the base station to be consistent with an absolute grant mapping relationship table of which a user equipment is notified via the air interface to use, so as to ensure that the absolute grant values corresponding to the base station and the user equipment are obtained from the same absolute grant mapping relationship table.

### SUMMARY OF THE INVENTION

In view of the above problems of the prior art, the present invention is directed to a radio resource scheduling method, apparatus and system, capable of ensuring that a network side and a UE side have the same understanding about granting information, thereby ensuring correct scheduling of radio resources.

In an embodiment, the present invention provides a radio resource scheduling method according to claim 1. The method includes the following steps.

In a case that two or more AG tables exist, a base station receives a signaling sent by a base station control node, where the signaling carries an information element, IE, for indicating which AG table among two or more AG tables is used by the base station;
the base station obtains the IE carried in the signaling, where the AG table used by the base station as indicated in the IE is the same as an AG table used by a UE and the AG table used by the UE is indicated to the UE by the base station control node through a RRC signaling; and
the base station performs HSUPA radio resource scheduling for the UE according to the AG table used by the base station as indicated in the IE.

In another embodiment, the present invention provides a corresponding base station in a radio resource scheduling system according to claim 5.

In still another embodiment, the present invention provides a corresponding base station control node in a radio resource scheduling system according to claim 6.

In yet still another embodiment, the present invention provides a radio resource scheduling system, which includes the described base station, and the described base station control node.

As can be known from the technical solutions, in the technical solutions of the present invention, in a case that two or more AG tables exist, a base station obtains an indication sent by a base station control node for indicating which AG table among two or more AG tables is used by the base station. The AG table used by the base station as indicated in the indication may be the same as an AG table used by a UE. Then, the base station performs HSUPA radio resource scheduling for the UE according to the received indication sent by the base station control node. Through such technical solutions, it is ensured that the network side and the UE side have the same understanding about the granting information, thereby ensuring correct scheduling of radio resources.

### BRIEF DESCRIPTION OF THE DRAWINGS

FIG 1 is a schematic flow chart of a radio resource scheduling method according to an embodiment of the present invention;
FIG. 2 is a schematic flow chart of another radio resource scheduling method according to an embodiment of the present invention;
FIG. 3 is a schematic structural view of a base station in a radio resource scheduling system according to an embodiment of the present invention; and
FIG. 4 is a schematic structural view of a base station control node in a radio resource scheduling system according to an embodiment of the present invention.

### DETAILED DESCRIPTION OF THE EMBODIMENTS

In order to make the objectives, technical solutions, and advantages of the present invention more comprehensible, the present invention is further described in detail below with reference to the accompanying drawings. It should be noted that, illustration is mainly given below by taking a WCDMA system as an example, which is not intended to limit the application of the technical solutions of the present invention in other systems.

As described above, the HSUPA technology is introduced by the 3GPP in R6 version, and an AG table is defined in this version. With the evolution of technology, a new AG table is additionally defined by the 3GPP in R7 version. As a result, together with the AG table defined in the R6, totally two AG tables exist. Since two AG tables exist, it needs to choose which AG table is to be used when AG commands are received and sent. It should be understood that, with the evolution of technology, more AG tables may exist.

In the technical solutions of the present invention, in a case that two or more AG tables exist, a base station obtains an indication sent by a base station control node for indicating which AG table among two or more AG tables is used by the base station. In addition, the AG table used by the base station as indicated in the indication may be the same as an AG table used by a UE.

Then, the base station performs HSUPA radio resource scheduling for the UE according to the received indication sent by the base station control node.

The technical solutions of the present invention are described in detail below through embodiments.

### Embodiment 1

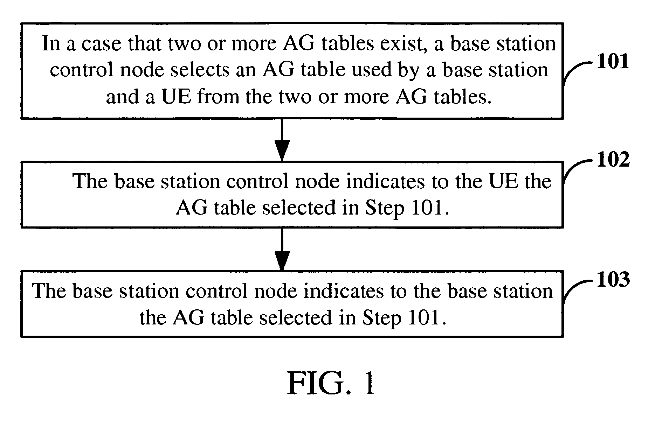

In a first embodiment, the present invention provides a radio resource scheduling method. FIG. 1 is a schematic flow chart of a radio resource scheduling method according to an embodiment of the present invention. Referring to FIG 1, the method includes the following steps.

In Step 101, in a case that two or more AG tables exist, a base station control node selects an AG table used by a base station and a UE from the two or more AG tables.

In this embodiment, taking a WCDMA system as an example, the base station control node may be a Radio Network Controller (RNC). The RNC is a device in a radio network subsystem, mainly controls the use and integrity of radio resources, and may implement the selection or configuration of the AG table used by the base station and the UE.

It should be noted that, as for the range of AG tables selected by the base station control node, in the case that R6 and R7 each have an AG table (respectively referred to as an AG table 1 and an AG table 2), the number is 2. However, with the evolution of technology, more AG tables may exist, which is not limited in the technical solutions of the present invention.

In Step 102, the base station control node indicates to the UE the AG table selected in Step 101.

In this step, the base station control node may indicate to the UE the selection result of Step 101 in many manners, for example, through a Radio Resource Control (RRC) signaling between the RNC and the UE. In this manner, a signaling may be used, or a newly defined information element (IE) may be used. If a newly defined IE is added, the newly defined IE may be named "BetaEd gain E-AGCH table selection", for the RNC to indicate to the UE which AG table to use.

In Step 103, the base station control node indicates to the base station the AG table selected in Step 101.

In the case that Step 102 has explicitly indicated the AG table used by the UE, if the base station is not indicated which AG table is used by the base station, the AG table used by the base station may be different from the AG table used by the UE, such that HSUPA scheduling cannot be normally performed. Therefore, it needs to indicate which AG table is used by the base station.

In this step, the base station control node may also indicate to the UE the selection result of Step 101 in many manners, for example, by adding an IE or a signaling for indicating an AG table used by the base station in a configuration signaling between the base station control node and the base station.

### Embodiment 2

The indicating manner in Step 103 is described in detail below through an embodiment.

### First Manner:

The first manner is to add information for indicating AG table choice into the existing message information. The information may be embodied in the form of an IE, and examples are given below.
(1) An IE for indicating AG table choice is added in E-DCH FDD Information IE (an IE of E-DCH FDD Information provides information required for E-DCH setup). The IE for indicating AG table choice may be named E-AGCH Table Choice IE. The E-DCH FDD Information IE with the added IE is as shown in Table 1.

**Table 1**

| E-DCH FDD Information | | | | | | |
|---|---|---|---|---|---|---|
| IE/Group Name | Presence | Range | IE Type and Reference | Semantics Description | Criticality | Assigned Criticality |
| E-DCH MAC-d Flows Information | M | | 9.2.2.13M | | - | |
| HARQ Process Allocation For 2ms Scheduled Transmission Grant | O | | HARQ Process Allocation for 2ms TTI 9.2.2.13Dn | If this IE is not included, scheduled transmission in all HARQ processes is allowed. | - | |
| E-DCH Maximum Bitrate | O | | 9.2.2.13T | | - | |
| E-DCH Processing Overload Level | O | | 9.2.1.79 | | - | |
| E-DCH Reference Power Offset | O | | 9.2.2.13Y | | - | |
| E-DCH Power Offset for Scheduling Info | O | | 9.2.1.85 | | YES | ignore |
| SixteenQAM UL Operation Indicator | O | | 9.2.2.88A | | YES | reject |
| **E-AGCH Table Choice** | **O** | **INTEGER (0,1)** | | | - | |

In the table, "E-AGCH Table Choice" is the newly added IE for indicating AG table choice. The E-AGCH Table Choice IE may be included in radio link setup, radio link addition, synchronous radio link reconfiguration, and asynchronous radio link reconfiguration processes between the RNC and a NodeB. The E-AGCH Table Choice IE is sent by the RNC to the NodeB through a RADIO LINK SETUP, RADIO LINK ADDITION, RADIO LINK RECONFIGURATION PREPARE, or RADIO LINK RECONFIGURATION REQUEST signaling. When the NodeB acquires the E-AGCH Table Choice IE value from the signaling, the NodeB needs to use an AG table indicated by the E-AGCH Table Choice IE in the process of sending granting information to the UE. Taking INTEGER (0, 1) in Table 1 as an example, when the indication is 0, it may represent that the AG table 1 is selected, and when the indication is 1, it may represent that the AG table 2 is selected. Definitely, since the indication values may be set, 0 may be used to represent that the AG table 2 is selected, and 1 may be used to represent that the AG table 1 is selected. In addition, if more AG tables exist, other numerals may be set to represent the selection of corresponding AG tables. For example, INTEGER (0, 1, 2, 3) may be set, with 2 representing an AG table 3, and 3 representing an AG table 4. The specific representation is not limited in the present invention.
(2) An IE for indicating AG table choice is added in E-DCH FDD Information IE (an IE of E-DCH FDD Information to Modify provides information required for E-DCH update). Likewise, the IE may be named E-AGCH Table Choice. The E-DCH FDD Information to Modify (for brevity, only a part of the information is shown) with the added IE is as shown in Table 2.

**Table 2**

| IE/Group Name | Presence | Range | IE Type and Reference | Semantics Description | Criticality | Assigned Criticality |
|---|---|---|---|---|---|---|
| >E-DCH Logical Channel To Delete | | 0..<maxnooflogicalchannels> | | | - | |
| >>Logical Channel ID | M | | 9.2.1.80 | | - | |
| HARQ Process Allocation For 2ms Scheduled Transmission Grant | O | | HARQ Process Allocation for 2ms TTI 9.2.2.13Dn | | - | |
| E-DCH Maximum Bitrate | O | | 9.2.2.13T | | - | |
| E-DCH Processing Overload Level | O | | 9.2.1.79 | | - | |
| E-DCH Reference Power Offset | O | | 9.2.2.13Y | | - | |
| MAC-e Reset Indicator | O | | 9.2.1.83 | | - | |
| E-DCH Power Offset for Scheduling Info | O | | 9.2.1.85 | | YES | ignore |
| SixteenQAM UL Operation Indicator | O | | 9.2.2.88A | | YES | reject |
| **E-AGCH Table Choice** | **O** | **INTEGER (0,1)** | | | - | |
| E-DCH MAC-d PDU Size Format | O | | 9.2.1.74B | | YES | reject |

In the table, "E-AGCH Table Choice" is the newly added IE for indicating AG table choice. The IE is included in radio link setup, radio link addition, synchronous radio link reconfiguration and asynchronous radio link reconfiguration processes between the RNC and the NodeB. The E-AGCH Table Choice IE is sent by the RNC to the NodeB through a RADIO LINK SETUP, RADIO LINK ADDITION, RADIO LINK RECONFIGURATION PREPARE or RADIO LINK RECONFIGURATION REQUEST signaling, and when the NodeB acquires the E-AGCH Table Choice IE value from the signaling, the NodeB needs to use an AG table indicated by the E-AGCH Table Choice IE in the process of sending granting information to the UE. Taking INTEGER (0, 1) in Table 1 as an example, when the indication is 0, it may represent that the AG table 1 is selected, and when the indication is 1, it may represent that the AG table 2 is selected. Definitely, since the indication values may be set, 0 is used to represent that the AG table 2 is selected, and 1 is used to represent that the AG table 1 is selected.

It should be noted that, the description of specific IE is merely for exemplary purposes, and a variety of other information may also be used, which is not limited in the present invention.

In addition, it should be noted that, in a conventional UMTS architecture, the IE for AG table choice may be transmitted through an Iub interface (an interface between the RNC and the NodeB).

In the technical solution according to this embodiment, an IE for indicating AG table choice is used in the signaling sent by the base station control node, and the base station receives the IE for indicating AG table choice, so as to obtain the indication for indicating which AG table is used.

### Second Manner:

The second manner is to add a new signaling, that is, add a signaling for indicating the selected AG table into a configuration signaling of the RNC and the NodeB.

The 3GPP 25.433 defines NodeB Application Part (NBAP) signaling exchange between the RNC and the NodeB. All information of the NodeB that needs to be configured by the RNC may be configured by the RNC for the NodeB through an NBAP signaling. Therefore, an NBAP signaling may be added to indicate the selected AG table (that is, the AG table used by the base station NodeB).

As such, if the NodeB receives the NBAP signaling, the NodeB can know the AG table to be used thereby after parsing the signaling.

If the technical solutions of the present invention are applied in a HSUPA scenario of a WCDMA system, the problem that the NodeB and the UE use different AG tables can be solved, so as to ensure the normal operation of HSUPA scheduling, thereby improving the operational stability of the HSUPA system.

If the technical solutions of the present invention are applied in other systems, especially TD-SCDMA systems, the problem that the base station and the UE use different AG tables can also be solved, so as to ensure the normal operation of radio resource scheduling, thereby improving the operational stability of the system.

In addition, based on the existing information, the existing signaling and signaling processes may be directly used by adding an IE, thereby solving the problem in the prior art with a low overhead.

### Embodiment 3

In addition to the manner that the base station control node selects an AG table and then indicates the selected AG table to the base station and the UE, "agreeing on an AG using relation" may also be adopted, so as to achieve consistency between the AG table used by the network side and the AG table used by the UE side. Specifically, an AG using relation may be agreed on, such that the use of AG tables is determined according to other configurations. For example, a corresponding relation between AG tables and application scenarios may be established, so as to realize the same understanding of the network side and the UE side about the grant by pre-configuration.

The manner that the base station control node sends an indication to the base station may also be adopted. For example, the base station control node sends the following indication to the base station: indicating the base station whether to enable a particular Quadrature Amplitude Modulation (QAM) mode for a current wireless connection. If the indication indicates the enabling of the particular QAM mode, it indicates that the base station uses an AG table corresponding to the enabled particular QAM mode. It should be noted that, the particular QAM mode may include 16QAM introduced in the R7 version, or other particular QAM modes corresponding to other protocol versions.

Specifically, the coexistence of the R6 version and the R7 version is taken as an example. The R6 version defines the AG table 1. Since 16QAM is introduced in the R7 version, the AG table 2 is also defined. Therefore, the following binding relation may be configured: the AG table 1 can only be in a scenario without 16QAM configuration, and the AG table 2 can only be in a scenario with 16QAM configuration.

According to the existing protocol, the RNC may indicate to the NodeB whether to enable 16QAM for a current wireless connection through IE SixteenQAM UL Operation Indicator. The IE may be carried in a synchronous radio link reconfiguration or asynchronous radio link reconfiguration message. When the NodeB applies 16QAM, the AG table 2 is used; otherwise, the AG table 1 is used.

By agreeing on an AG using relation such that the use of AG tables is determined according to other configurations (for example, indicating whether to use a particular QAM mode), the existing signaling and signaling processes may be directly used by adding an IE, thereby solving the problem in the prior art with a low overhead.

### Embodiment 4

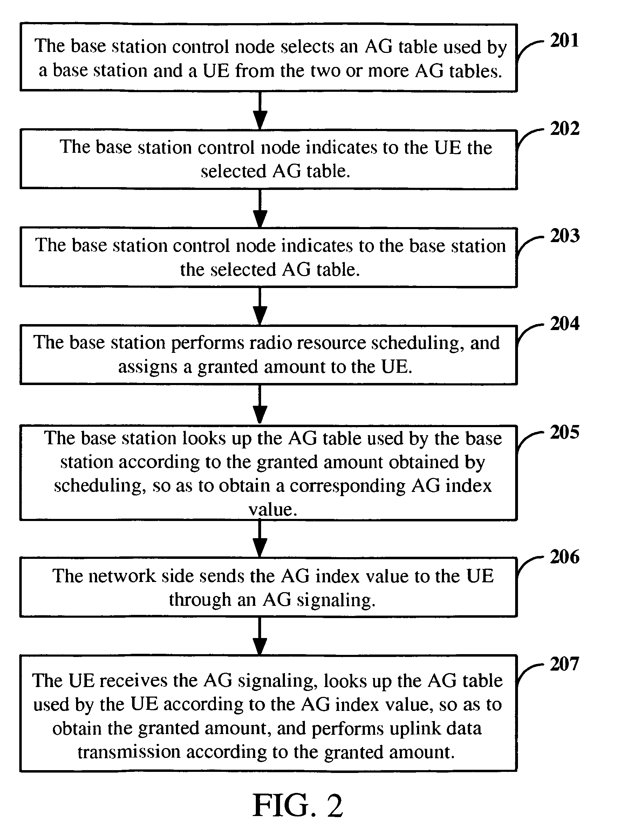

In order to make the solutions of the present invention more comprehensible, an embodiment (the fourth embodiment) of the present invention is described through a complete uplink scheduling process by still taking HSUPA of a WCDMA system as an example with reference to FIG. 2. FIG. 2 is a schematic flow chart of another radio resource scheduling method according to an embodiment of the present invention. Referring to FIG. 2, the method includes the following steps.

In Step 201, the base station control node selects an AG table used by a base station and a UE from the two or more AG tables.

This step is similar to Step 101, so the details will not be described herein again.

In Step 202, the base station control node indicates to the UE the selected AG.

This step is similar to Step 102, so the details will not be described herein again.

In Step 203, the base station control node indicates the selected AG to the base station.

This step is similar to Step 103, so the details will not be described herein again.

In addition, "agreeing on an AG using relation" may also be adopted, so as to replace Step 201 to Step 203.

After the base station and UE knows the AG table used thereby, the following radio resource scheduling process may be performed.

In Step 204, the base station performs radio resource scheduling, and assigns a granted amount to the UE.

During uplink HSUPA scheduling, the uplink transmission scheduling is accomplished by the base station by assigning a grant to the UE. For example, the base station may measure an uplink air interface load, and performs scheduling according to the status of the uplink air interface load. When the uplink load is high, the base station may reduce the granted amount assigned to the UE; on the contrary, when the uplink load is low, the base station may increase the granted amount assigned to the UE. In addition, the base station may also assign the granted amount to the UE according to a happy status reported by the UE and/or a priority level of the UE, for example, the UE having a high priority level may obtain a large granted amount, or the UE whose happy status reported is unhappy may obtain a large granted amount. Alternatively, the base station fully considers the uplink air interface load, the happy status reported by the UE, and the priority level of the UE, and thus fully considers how to assign the grant to the UE.

In Step 205, the base station looks up the AG table used by the base station according to the granted amount assigned, so as to obtain a corresponding AG index value.

In Step 206, the network side sends the AG index value to the UE through an AG signaling.

This step may be performed by the base station on the network side, for example, the base station transmits an AG signaling through a granting channel, and sends the AG index value to the UE through the AG signaling, thereby assigning granting information to the UE. For example, the base station may transmit an AG signaling through an E-AGCH channel, so as to assign AG information to the UE. The AG information may be the AG index value determined in Step 205. The AG signaling is absolute grant, and means that a certain grant value is directly assigned to the UE, and the UE subsequently calculates transmission rate and transmission power according to the new grant value.

In addition, the base station may also transmit a Relative Grant (RG) signaling through an E-RGCH channel, so as to assign RG information to the UE. The RG signaling is relative grant, and means that the grant value to the UE is adjusted based on the current grant.

As for the specific transmission method of the AG information, the base station may transmit an AG signaling index value through an E-AGCH channel.

In Step 207, the UE receives the AG signaling, looks up the AG table used by the UE according to the AG index value, so as to obtain a granted amount, and performs uplink data transmission according to the granted amount.

The UE has received the indication and known the AG table to be used thereby in the previous steps. Therefore, in this step, after receiving the AG signaling, the UE looks up the corresponding AG table according to the AG signaling index value in the AG signaling, so as to obtain a granted amount, and uses the granted amount as a current grant value. If the granted amount already exists, the newly obtained granted amount is used to update the original granted amount, and thus used as a new current granted amount. The UE needs to calculate the transmission power and maximum transmission rate according to the current granted amount, and perform uplink data transmission.

### Embodiment 5

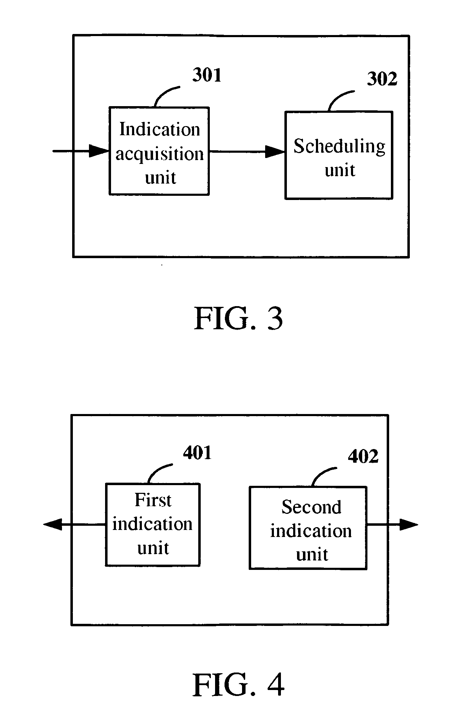

In another embodiment, the present invention further provides a base station in a radio resource scheduling system, which is described below with reference to FIG. 3. FIG. 3 is a schematic structural view of a base station in a radio resource scheduling system according to an embodiment of the present invention.

By taking a WCDMA system as an example, two or more AG tables may exist in the system due to multiple versions.

In this case, the base station may include an indication acquisition unit 301 and a scheduling unit 302. The indication acquisition unit 301 is configured to obtain an indication sent by a base station control node for indicating which AG table among the two or more AG tables is used by the base station, in which the AG table used by the base station as indicated in the indication is the same as an AG table used by a UE. The scheduling unit 302 is configured to perform HSUPA radio resource scheduling for the UE according to the indication sent by the base station control node and obtained by the indication acquisition unit 301.

Specifically, according to different indications used in the technical solutions, the function of acquiring indication information of the indication acquisition unit 301 may be implemented by different subunits.

For example, the used indication may be a signaling sent by the base station control node (for example, to the base station), an IE for indicating AG table choice is used in the signaling, and the base station receives the IE for indicating AG table choice, so as to obtain the indication for indicating which AG table is used. In this manner, the indication acquisition unit may include a first subunit (not shown in the Figures), configured to receive the signaling sent by the base station control node. Since an IE for indicating AG table choice is used in the signaling, and the IE indicates which AG table among the two or more AG tables is used by the base station, the first subunit can obtain the indication for indicating which AG table is used.

For another example, the used indication may be an indication that the base station control node indicates to the base station whether to enable a particular QAM mode for a current wireless connection, and if the indication indicates the enabling of the particular QAM mode, it indicates that the base station uses an AG table corresponding to the enabled particular QAM mode. In this manner, the indication acquisition unit may include a second subunit (not shown in the Figures), configured to receive the indication that the base station control node indicates to the base station whether to enable the particular QAM mode for the current wireless connection. Since whether to enable the particular QAM mode can indicate whether the base station needs to use the AG table corresponding to the enabled particular QAM mode, the second subunit can obtain the indication for indicating which AG table is used.

In addition, the scheduling unit 302 of the base station may also be accomplished through more detailed units, for example, the scheduling unit 302 may include: a third subunit, configured to assign a granted amount to the UE; a fourth subunit, configured to look up the AG table used by the base station according to the granted amount assigned by the third subunit, so as to obtain a corresponding AG index value; and a fifth subunit, configured to send the AG index value obtained by the fourth subunit to the UE through an AG signaling.

Further, the base station may further include other unit modules, so as to implement the steps completed by the base station in the corresponding method embodiments.

### Embodiment 6

In still another embodiment, the present invention further provides a base station control node in a radio resource scheduling system, which is described below with reference to FIG. 4. FIG. 4 is a schematic structural view of a base station control node in a radio resource scheduling system according to an embodiment of the present invention.

By taking a WCDMA system as an example, two or more AG tables may exist in the system due to multiple versions.

In this case, the base station control node may include a first indication unit 401 and a second indication unit 402. The first indication unit 401 is configured to send a first indication to a base station, so as to indicate which AG table among the two or more AG tables is used by the base station. The second indication unit 402 is configured to send a second indication to a User Equipment (UE), so as to indicate which AG table among the two or more AG tables is used by the UE. The AG table used by the base station as indicated in the first indication is the same as the AG table used by the UE as indicated in the second indication.

Specifically, the indications used in the technical solutions of the present invention may be in various forms. For example, the first indication is a signaling sent by the base station control node (for example, a signaling send by the base station control node to the base station), an IE for indicating AG table choice is used in the signaling, and the IE indicates which AG table among the two or more AG tables is used by the base station. Alternatively, the first indication is an indication that the base station control node indicates to the base station whether to enable a particular QAM mode for a current wireless connection, and if the indication indicates the enabling of the particular QAM mode, it indicates (or shows) that the base station uses an AG table corresponding to the enabled particular QAM mode.

In addition, the base station control node may further include other unit modules, so as to implement the steps completed by the base station control node in the corresponding method embodiments.

In addition, in an embodiment, the present invention further provides a radio resource scheduling system, which includes the described base station, and the described base station control node. Since the base station and the base station control node have been described in detail above, the details will not be described herein again.

Through the technical solutions of the present invention, in a case that two or more AG tables exist, a base station obtains an indication sent by a base station control node for indicating which AG table among two or more AG tables is used by the base station. The AG table used by the base station as indicated in the indication may be the same as an AG table used by a UE. Then, the base station performs HSUPA radio resource scheduling for the UE according to the received indication sent by the base station control node. Through such technical solutions, it can be ensured that the network side and the UE side have the same understanding about the granting information, thereby ensuring correct scheduling of radio resources.

If the technical solutions of the present invention are applied in a HSUPA scenario of a WCDMA system, the problem that the NodeB and the UE use different AG tables can be solved, so as to ensure the normal operation of HSUPA scheduling, thereby improving the operational stability of the HSUPA system.

If the technical solutions of the present invention are applied in other systems, especially TD-SCDMA systems, the problem that the NodeB and the UE use different AG tables can also be solved, so as to ensure the normal operation of radio resource scheduling, thereby improving the operational stability of the system.

It should be noted that, the embodiments are described by taking a WCDMA system as an example. It should be understood that, the technical solutions of the present invention may also be applied in other systems, especially TD-SCDMA systems. In the systems, the term "base station" has different names, for example, NodeB in WCDMA and TD-SCDMA systems, and may be collectively referred to as a "base station". In addition, RNC in WCDMA and TD-SCDMA systems may be collectively referred to as a "base station control node".

In the present invention, the term "receive" may be either construed as actively acquiring information from other modules, or construed as receiving information sent by other modules.

It should be understood by persons skilled in the art that the accompanying drawings are merely schematic views of a preferred embodiment, and modules or processes in the accompanying drawings are not necessarily required in implementing the present invention.

Persons of ordinary skill in the art should understand that all or a part of the steps in the method according to the embodiments of the present invention can be implemented by a program instructing relevant hardware, and the program may be stored in a computer readable storage medium. When the program is run, one or a combination of the steps of the method according to the embodiments of the present invention are performed.

In addition, the functional units in the embodiments of the present invention may either be integrated in a processing module, or each be a separate physical unit; alternatively, two or more of the units are integrated in one module. The integrated modules may be implemented in the form of hardware or software functional modules. If implemented in the form of software functional modules and sold or used as an independent product, the integrated modules may also be stored in a computer readable storage medium.

The storage medium may be a Read-Only Memory (ROM), a magnetic disk or a Compact Disk Read-Only Memory (CD-ROM).

The above descriptions are merely preferred embodiments of the present invention, but not intended to limit the scope of the present invention. Any modifications, variations or replacement that can be easily derived by those skilled in the art should fall within the scope of the present invention. Therefore, the protection scope of the present invention is subject to the appended claims.

## Claims

1. A radio resource scheduling method, comprising:
receiving (202), by a base station, a signaling sent by a base station control node, wherein the signaling carries an information element, IE, for indicating which Absolute Grant, AG, table among two or more AG tables is used by the base station, in a case that two or more AG tables exist;
obtaining (203), by the base station, the IE carried in the signaling, wherein the AG table used by the base station as indicated in the IE is the same as an AG table used by a User Equipment, UE and the AG table used by the UE is indicated to the UE by the base station control node through a Radio Resource Control, RRC, signaling; and
performing (204), by the base station, High Speed Uplink Packet Access, HSUPA, radio resource scheduling for the UE according to the AG table used by the base station as indicated in the IE.

2. The method according to claim 1, wherein the signaling is a RADIO LINK SETUP, RADIO LINK ADDITION, RADIO LINK RECONFIGURATION PREPARE, or RADIO LINK RECONFIGURATION REQUEST signaling.

3. The method according to any one of claim 1 or 2, wherein the performing, by the base station, HSUPA radio resource scheduling for the UE comprises:
assigning (204), by the base station, a granted amount to the UE;
looking up (205), by the base station, the AG table used by the base station according to the assigned granted amount, so as to obtain a corresponding AG index value; and
sending (206), by the base station, the AG index value to the UE through an AG signaling.

4. The method according to claim 3, further comprising:
receiving (207), by the UE, the AG signaling, looking up the AG table used by the UE according to the AG index value, so as to obtain the granted amount, and performing uplink data transmission according to the granted amount.

5. A base station in a radio resource scheduling system, wherein two or more Absolute Grant, AG, tables exist in the system, the base station comprising:
an indication acquisition unit (301), configured to obtain an indication sent by a base station control node for indicating which AG table among the two or more AG tables is used by the base station, wherein the AG table used by the base station as indicated in the indication is the same as an AG table used by a User Equipment, UE and the AG table used by the UE is indicated to the UE by the base station control node through a Radio Resource Control, RRC, signaling; and
a scheduling unit (302), configured to perform High Speed Uplink Packet Access, HSUPA, radio resource scheduling for the UE according to the indication sent by the base station control node and obtained by the indication acquisition unit (301);
wherein the indication acquisition unit (301) comprises a first subunit, configured to receive a signaling sent by the base station control node and obtain an information element, IE, for indicating AG table choice and carried in the signaling, wherein the IE indicates which AG table among the two or more AG tables is used by the base station.

6. A base station control node in a radio resource scheduling system, wherein two or more Absolute Grant, AG, tables exist in the system, the base station control node comprising:
a first indication unit (401), configured to send a first indication to a base station, so as to indicate which AG table among the two or more AG tables is used by the base station; and
a second indication unit (402), configured to send a second indication to a User Equipment, UE, so as to indicate which AG table among the two or more AG tables is used by the UE;
wherein the AG table used by the base station as indicated in the first indication is the same as the AG table used by the UE as indicated in the second indication through a Radio Resource Control, RRC, signaling, and the first indication is an information element, IE, for indicating AG table choice and carried in a signaling sent by the base station control node, wherein the IE indicates which AG table among the two or more AG tables is used by the base station.

7. A radio resource scheduling system, comprising the base station according to claim 5 and the base station control node according to claim 6.

## Patentansprüche

1. Funkressourcenplanungsverfahren, das die folgenden Schritte aufweist:
Empfangen (202) durch eine Basisstation einer durch einen Basisstationssteuerknoten gesendeten Signalisierung, wobei die Signalisierung ein Informationselement, IE, zum Anzeigen befördert, welche Absolut-Zuordnungs-Tabelle (Absolute Grant, AG, table) aus zwei oder mehreren AG-Tabellen durch die Basisstation verwendet wird, in einem Fall, dass zwei oder mehrere AG-Tabellen vorhanden sind;
Beschaffen (203) durch die Basisstation des in der Signalisierung beförderten IE, wobei die durch die Basisstation verwendete AG-Tabelle, die im IE angezeigt wird, dieselbe wie eine AG-Tabelle ist, die durch ein Teilnehmergerät (User Equipment, UE), verwendet wird, und die durch das UE verwendete AG-Tabelle dem UE durch den Basisstationssteuerknoten durch eine "Radio Resource Control"-Signalisierung, RRC-Signalisierung, angezeigt wird; und
Durchführen (204) durch die Basisstation einer "High Speed Uplink Packet Access"-Funkressourcenplanung, HSUPA-Funkressourcenplanung, für das UE gemäß der durch die Basisstation verwendeten AG-Tabelle, die im IE angezeigt wird.

2. Verfahren nach Anspruch 1, wobei die Signalisierung eine "RADIO LINK SETUP"-, "RADIO LINK ADDITION"-, "RADIO LINK RECONFIGURATION PREPARE"-oder "RADIO LINK RECONFIGURATION REQUEST"-Signalisierung ist.

3. Verfahren nach Anspruch 1 oder 2, wobei das Durchführen der HSUPA-Funkressourcenplanung für das UE durch die Basisstation aufweist:
Zuweisen (204) durch die Basisstation eines gewährten Betrags zu dem UE; Nachschlagen (205) durch die Basisstation in der durch die Basisstation verwendeten AG-Tabelle gemäß dem zugewiesenen gewährten Betrag, um einen entsprechenden AG-Indexbetrag zu erhalten; und
Senden (206) durch die Basisstation des AG-Indexbetrags an das UE durch eine AG-Signalisierung.

4. Verfahren nach Anspruch 3, das ferner aufweist:
Empfangen (207) der AG-Signalisierung durch das UE, Nachschlagen in der durch das UE verwendeten AG-Tabelle gemäß dem AG-Indexbetrag, um den gewährten Betrag zu erhalten, und Durchführen einer Aufwärtsstreckendatenübertragung gemäß dem gewährten Betrag.

5. Basisstation in einem Funkressourcenplanungssystem, wobei zwei oder mehrere Absolut-Zuordnungs-Tabellen (Absolute Grant, AG, tables) im System vorhanden sind, wobei die Basisstation Folgendes aufweist:
eine Anzeigeerfassungseinheit (301), die konfiguriert ist, eine Anzeige zu beschaffen, die durch einen Basisstationssteuerknoten gesendet wird, zum Anzeigen, welche AG-Tabelle aus den zwei oder mehreren AG-Tabellen durch die Basisstation verwendet wird, wobei die durch die Basisstation verwendete AG-Tabelle, die in der Anzeige angezeigt wird, dieselbe wie eine AG-Tabelle ist, die durch ein Teilnehmergerät (User Equipment, UE) verwendet wird, und die durch das UE verwendete AG-Tabelle dem UE durch den Basisstationssteuerknoten durch eine "Radio Resource Control"-Signalisierung, RRC-Signalisierung, angezeigt wird; und
eine Planungseinheit (302), die konfiguriert ist, eine "High Speed Uplink Packet Access"-Funkressourcenplanung, HSUPA-Funkressourcenplanung, für das UE gemäß der Anzeige durchzuführen, die durch den Basisstationssteuerknoten gesendet und durch die Anzeigeerfassungseinheit (301) beschafft wird;
wobei die Anzeigeerfassungseinheit (301) eine erste Untereinheit aufweist, die konfiguriert ist, eine Signalisierung zu empfangen, die durch den Basisstationssteuerknoten gesendet wird, und ein Informationselement, IE, zum Anzeigen einer AG-Tabellenauswahl zu beschaffen und das in der Signalisierung befördert wird, wobei das IE anzeigt, welche AG-Tabelle aus den zwei oder mehreren AG-Tabellen durch die Basisstation verwendet wird.

6. Basisstationssteuerknoten in einem Funkressourcenplanungssystem, wobei zwei oder mehrere Absolut-Zuordnungs-Tabellen (Absolute Grant, AG, tables) im System vorhanden sind, wobei der Basisstationssteuerknoten Folgendes aufweist:
eine erste Anzeigeeinheit (401), die konfiguriert ist, eine erste Anzeige an eine Basisstation zu senden, um anzuzeigen, welche AG-Tabelle aus den zwei oder mehreren AG-Tabellen durch die Basisstation verwendet wird; und
eine zweite Anzeigeeinheit (402), die konfiguriert ist, eine zweite Anzeige an ein Teilnehmergerät (User Equipment, UE) zu senden, um anzuzeigen, welche AG-Tabelle aus den zwei oder mehreren AG-Tabellen durch das UE verwendet wird;
wobei die durch die Basisstation verwendete AG-Tabelle, die in der ersten Anzeige angezeigt wird, dieselbe wie die durch das UE verwendete AG-Tabelle ist, die in der zweiten Anzeige durch eine "Radio Resource Control"-Signalisierung, RRC-Signalisierung, angezeigt wird, und die erste Anzeige ein Informationselement, IE, zum Anzeigen einer AG-Tabellenauswahl ist und die in einer Signalisierung befördert wird, die durch den Basisstationssteuerknoten gesendet wird, wobei das IE anzeigt, welche AG-Tabelle aus den zwei oder mehreren AG-Tabellen durch die Basisstation verwendet wird.

7. Funkressourcenplanungssystem, das die Basisstation nach Anspruch 5 und den Basisstationssteuerknoten nach Anspruch 6 aufweist.

## Revendications

1. Procédé d'ordonnancement de ressources radio, comprenant :
la réception (202), par une station de base, d'une signalisation envoyée par un noeud de commande de station de base, la signalisation comportant un élément d'information, IE, pour indiquer parmi deux ou plus de deux tables d'Autorisation Absolue, AG, celle qui est utilisée par la station de base, lorsque deux ou plus de deux tables AG existent ;
l'obtention (203), par la station de base, de l'IE inclus dans la signalisation, la table AG utilisée par la station de base indiquée dans l'IE étant la même qu'une table AG utilisée par un Equipement Utilisateur, UE, et la table AG utilisée par l'UE étant indiquée à l'UE par le noeud de commande de station de base par le biais d'une signalisation de Commande de Ressource Radio, RRC ; et
l'exécution (204), par la station de base, d'un ordonnancement de ressources radio pour un Accès par Paquets de Liaison Montante à Haut Débit, HSUPA, pour l'UE en fonction de la table AG utilisée par la station de base indiquée dans l'IE.

2. Procédé selon la revendication 1, dans lequel la signalisation est une signalisation ETABLIR LIAISON RADIO, AJOUTER LIAISON RADIO, PREPARER RECONFIGURATION LIAISON RADIO ou DEMANDER RECONFIGURATION LIAISON RADIO.

3. Procédé selon l'une quelconque des revendications 1 ou 2, dans lequel l'exécution, par la station de base, d'un ordonnancement de ressources radio HSUPA pour l'UE comprend :
l'attribution (204), par la station de base, d'une quantité autorisée à l'UE ;
la consultation (205), par la station de base, de la table AG utilisée par la station de base en fonction de la quantité autorisée attribuée, de manière à obtenir une valeur d'indice AG correspondante ; et
l'envoi (206), par la station de base, de la valeur d'indice AG à l'UE par le biais d'une signalisation AG.

4. Procédé selon la revendication 3, comprenant en outre :
la réception (207), par l'UE, de la signalisation AG, la consultation de la table AG utilisée par l'UE en fonction de la valeur d'indice AG, de manière à obtenir la quantité autorisée, et l'exécution d'une transmission de données sur liaison montante en fonction de la quantité autorisée.

5. Station de base dans un système d'ordonnancement de ressources radio, deux ou plus de deux tables d'Autorisation Absolue, AG, existant dans le système, la station de base comprenant :
une unité d'acquisition d'indication (301), configurée pour obtenir une indication envoyée par un noeud de commande de station de base indiquant parmi les deux ou plus de deux tables AG, celle qui est utilisée par la station de base, la table AG utilisée par la station de base indiquée dans l'indication étant la même qu'une table AG utilisée par un Equipement Utilisateur, UE, et la table AG utilisée par l'UE étant indiquée à l'UE par le noeud de commande de station de base par le biais d'une signalisation de Commande de Ressource Radio, RRC ; et
une unité d'ordonnancement (302), configurée pour exécuter un ordonnancement de ressources radio pour un Accès par Paquets de Liaison Montante à Haut Débit, HSUPA, pour l'UE en fonction de l'indication envoyée par le noeud de commande de station de base et obtenue par l'unité d'acquisition d'indication (301) ;
dans laquelle l'unité d'acquisition d'indication (301) comprend une première sous-unité, configurée pour recevoir une signalisation envoyée par le noeud de commande de station de base et obtenir un élément d'information, IE, pour indiquer le choix de table AG et inclus dans la signalisation, l'IE indiquant parmi les deux ou plus de deux tables AG, celle utilisée par la station de base.

6. Noeud de commande de station de base dans un système d'ordonnancement de ressources radio, deux ou plus de deux tables d'Autorisation Absolue, AG, existant dans le système, le noeud de commande de station de base comprenant :
une première unité d'indication (401), configurée pour envoyer une première indication à une station de base, de manière à indiquer parmi les deux ou plus de deux tables AG, celle qui est utilisée par la station de base ; et
une seconde unité d'indication (402), configurée pour envoyer une seconde indication à un Equipement Utilisateur, UE, pour indiquer parmi les deux ou plus de deux tables AG, celle qui est utilisée par l'UE ;
dans lequel la table AG utilisée par la station de base indiquée dans la première indication est la même que la table AG utilisée par l'UE indiquée dans la seconde indication par le biais d'une signalisation de Commande de Ressource Radio, RRC, et la première indication est un élément d'information, IE, pour indiquer un choix de table AG et inclus dans une signalisation envoyée par le noeud de commande de station de base, l'IE indiquant la table AG parmi les deux ou plus de deux tables AG qui est utilisée par la station de base.

7. Système d'ordonnancement de ressources radio, comprenant la station de base selon la revendication 5 et le noeud de commande de station de base selon la revendication 6.
